**Europäisches Patentamt**

**European Patent Office**

**Office européen des brevets**

(19)

(11) Veröffentlichungsnummer : **0 330 885 B1**

# EUROPÄISCHE PATENTSCHRIFT

(12)

(45) Veröffentlichungstag der Patentschrift :
**22.05.91 Patentblatt 91/21**

(51) Int. Cl.$^5$ : **B60Q 1/04**

(21) Anmeldenummer : **89102307.9**

(22) Anmeldetag : **10.02.89**

(54) **Fahrzeugscheinwerfer.**

(30) Priorität : **03.03.88 DE 8802828 U**

(43) Veröffentlichungstag der Anmeldung :
**06.09.89 Patentblatt 89/36**

(45) Bekanntmachung des Hinweises auf die
Patenterteilung :
**22.05.91 Patentblatt 91/21**

(84) Benannte Vertragsstaaten :
**DE ES FR GB IT SE**

(56) Entgegenhaltungen :
**DE-A- 2 537 039**

(73) Patentinhaber : **Hella KG Hueck & Co.
Rixbecker Strasse 75 Postfach 28 40
W-4780 Lippstadt (DE)**

(72) Erfinder : **Kathmann, Franz
Robert-Koch-Strasse 36
W-4780 Lippstadt (DE)**

EP 0 330 885 B1

**Beschreibung**

Die Erfindung bezieht sich auf einen Fahrzeugscheinwerfer mit den Merkmalen :

- der in ein Gehäuse eingesetzte Reflektor ist wahlweise um zwei senkrechte aufeinanderstehende Achsen verschwenkbar und in zwei verstellbaren Schwenkpunkten und einem dritten Schwenkpunkt gelagert,
- mindestens ein Schwenkpunkt wird von einem Kugelkopf und einem starr mit dem Reflektor verbundenen den Kugelhopt autnekmenders Aufnahmeteil gebildet,
- der Kugelkopf ist an dem freien Ende eines Bolzens angeordnet, dessen Längsachse etwa parallel zur optischen Achse des Scheinwerfers verläuft,
- in die Rückseite des Gehäuses ist eine Öffnung eingebracht, in die der Bolzen eingreift,

Bei einem solchen aus der DE-A-35 09 831 bekannten Scheinwerfer weist der Bolzen einen Gewindeschaft auf, der in eine in der Öffnung der Gehäuserückseite eingesetzte Mutter eingeschraubt ist. An dem aus dem Gehäuse herausragenden Endabschnitt des Bolzens ist ein Drehknopf befestigt, während der im Inneren des Gehäuses angeordnete Kugelkopf des Bolzens selbstrastend in eine Gelenkpfanne des starr mit dem Reflektor verbundenen Aufnahmeteils eingesetzt ist. Ein solches Kugelgelenk ist zwar einfach und schnell zu montieren, jedoch löst sich bei seiner Demontage die Kugelgelenkverbindung bei einer relativ großen Kraft ruckartig. Dadurch kann der Scheinwerfer an seinen Lagerstellen beschädigt werden. Ein Lösen der Kugelgelenkverbindung ist notwendig, wenn der Bolzen für die manuelle Einstellung nachträglich gegen einen Bolzen des Stellgliedes einer Leuchtweiteregelungsanlage ausgetauscht werden soll. Ein solcher Austausch wäre sehr einfach und schnell möglich, wenn er von der Scheinwerferrückseite her erfolgen könnte, da hierbei die anderen Verbindungen zwischen Reflektor und Gehäuse nicht gelöst werden müssen. Außerdem muß bei der Montage eines Stellgliedes der Kugelkopf seines Bolzens mit einer relativ großen Kraft in die Gelenkpfanne eingedrückt werden. Dadurch kann das Innere des Stellgliedes zerstört werden.

Ein ruckartiges Lösen der Kugelgelenkverbindung wird bei einem Scheinwerfer nach der DE-A-35 09 831 vermieden, wenn zwischen dem Aufnahmeteil und dem Reflektor eine Verbindung besteht, die durch eine weitere Öffnung in der Gehäuserückseite zu lösen ist. Hierbei muß um einen Austausch des Bolzens eines Festpunktes oder des Bolzens einer manuellen Einstellvorrichtung gegen den Bolzen des Stellgliedes einer Leuchtweiteregelungsanlage vornehmen zu können, der Reflektor an allen drei Lagerstellen gelöst werden, da die Aufnahmeteile größer als die Öffnungen in der Gehäuserückseite sind. Eine solche Demontage bzw. Montage des Reflektors ist sehr umständlich und zeitaufwendig. Würde ein solches Aufnahmeteil bei einem Scheinwerfer (siehe DE-A-31 49 831) verwendet werden, dessen Reflektor in einem von Lichtscheibe und Gehäuse gebildeten Innenraum angeordnet ist, so müßte der Reflektor nicht nur an allen drei Lagerstellen von dem Gehäuse gelöst werden, sondern es müßte zusätzlich noch die Lichtscheibe von dem Gehäuse abgenommen werden. Dabei könnte die Lichtscheibe und/oder das Gehäuse beschädigt werden. Ferner kann wegen einer unsachgemäßen Montage der Lichtscheibe und wegen der Öffnung in der Gehäuserückseite, durch die hindurch die Verbindung zwischen dem Reflektor und dem Aufnahmeteil gelöst werden kann, Spritzwasser und Schmutz in den Innenraum des Scheinwerfers eindringen.

Aufgabe der Erfindung ist es, den im Gattungsbegriff beschriebenen Fahrzeugscheinwerfer derart zu verbessern, daß von seiner Rückseite her der den Kugelkopf tragende ortsfeste oder manuell verstellbare Bolzen ruckfrei aus der zwischen Kugelkopf und Aufnahmeteil bestehenden Verbindung lösbar ist und aus der Öffnung der Gehäuserückseite herausziehbar ist. Nach der Demontage des Bolzens soll der Bolzen des Stellgliedes einer Leuchtweiteregelungsanlage von der Gehäuserückseite her mit seinem Kugelkopf ruckfrei in das starr mit dem Reflektor verbundene Aufnahmeteil einsetzbar sein. Dabei soll der Reflektor leichtgängig verstellbar und sicher gelagert sein. Diese Aufgabe wird nach der Erfindung dadurch gelöst, daß

- der freie Endabschnitt des Aufnahmeteils als Hülse ausgebildet ist, deren Längsachse senkrecht zur Längsachse des Bolzens steht,
- der Innendurchmesser der Hülse dem Außendurchmesser des Kugelkopfes entspricht,
- die Hülse, auf der der Gehäuserückseite zugewandten Seite einen in Richtung der Längsausdehnung verlaufenden Schlitz aufweist, durch den der Bolzen hindurchragt,
- die Hülse zumindest an einem freien Ende ohne verbleibenden Innenrand geöffnet ist.

Bei einer solchen Lösung kann der Kugelkopf ruckfrei aus der Hülse herausgeschwenkt werden. Dadurch kommt es bei einer korrekten Demontage bzw. Montage des Bolzens zu keiner Beschädigung des Scheinwerfers an seinen Lagerstellen. Bei der Montage bzw. Demontage des Kugelkopfes ist es hilfreich, wenn der Reflektor von Hand, z. B. durch die dem Glühlampenwechsel dienende Gehäuseöffnung hindurch zur Gehäuserückseite hin gezogen wird.

Weiterhin ist es vorteilhaft, wenn die Längsachse der Hülse senkrecht zu der horizontalen Schwenkachse des Reflektors erläuft. Dadurch kann die Hülse beim Schwenken des Scheinwerfers um seine horizontale Achse der Schwenkbewegung des Reflektors folgen, so daß keine Verspannungen zwischen Gehäuse und Reflektor entstehen.

Ein weiterer Vorteil ist es, wenn die Hülse an ihrem geschlossenen Ende eine schlitzartige Öffnung aufweist, die in Richtung in der sich der Bolzen erstreckt, geöffnet ist. Bei einer solchen Lösung kann der Bolzen auch bei seiner Demontage in Einsetzrichtung des Reflektors in die Hülse eingedrückt werden. Dies ist besonders bei einer automatischen Fertigung vorteilhaft. In diesem Zusammenhang ist es weiterhin vorteilhaft, wenn die Hülse an dem freien Ende eines bolzenförmigen Aufnahmeteils angeordnet ist, dessen Längsachse etwa senkrecht zur Längsachse der Hülse verläuft und das selbstrastend und/oder selbstklemmend in eine Öffnung oder Vertiefung des Reflektors eingesetzt ist. Dadurch kann bei einer entgegen der Lichtaustrittsrichtung wirkenden Druckkraft gegen den Reflektor kein das Aufnahmeteil zerstörendes Drehmoment wie bei dem Scheinwerfer nach der DE-OS 35 09 831 auftreten.

Außerdem ist es vorteilhaft, wenn in dem Bereich des bolzenförmigen Aufnahmeteils der in den Reflektor eingesetzt ist, eine Sackbohrung angebracht ist und an die Mantelfläche des bolzenförmigen Aufnahmeteils umlaufende Rippen angeformt sind, die in der Innenfläche der Vertiefung oder der Öffnung des Reflektors unter Vorspannung anliegen. Hierbei ist es zweckmäßig, wenn die Vertiefung bzw. die Öffnung in die das bolzenförmige Aufnahmeteil unter Vorspannung eingesetzt ist, sich in Einsetzrichtung des Aufnahmeteils konisch verjüngt. Dadurch ist ein sicherer Festsitz des Aufnahmeteils an dem Reflektor gewährleistet, ohne daß durch die Keilwirkung des bolzenförmigen Aufnahmeteils relativ große Druckkräfte auf die Innenfläche der Vertiefung der Öffnung des Reflektors wirken.

Ferner ist es ein Vorteil, wenn der den Kugelkopf tragende Bolzen mittels eines Drehverschlusses lösbar an dem Gehäuse arretiert ist. Dadurch kann die Verbindung zwischen dem Bolzen und dem Gehäuse leicht und schnell demontiert und montiert werden.

Die Erfindung ist in der Zeichnung dargestellt und zwar zeigt

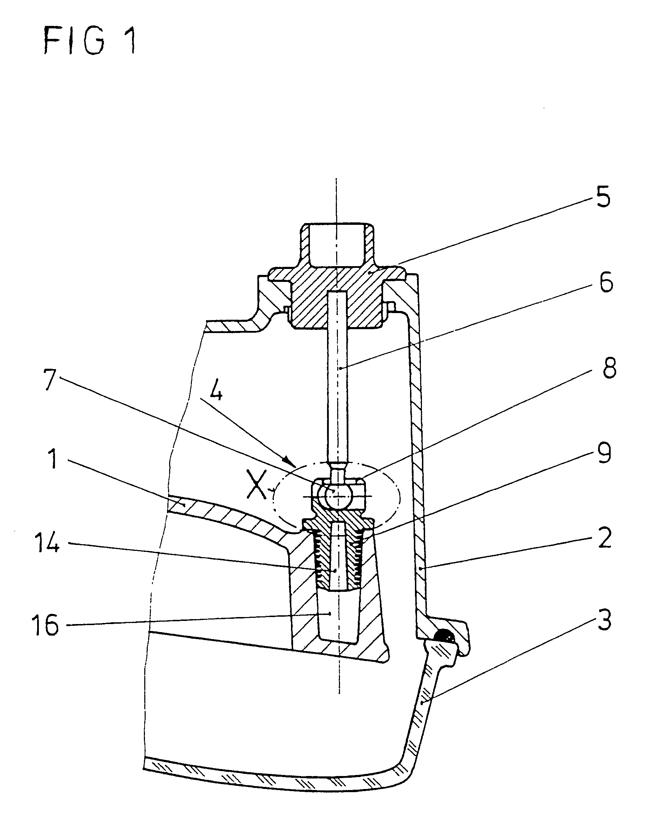

Figur 1 einen mittleren Längsschnitt durch einen ortsfesten Schwenkpunkt eines Scheinwerfers der von dem Kugelkopf eines Bolzens und einem starr mit dem Reflektor verbundenen Aufnahmeteil gebildet wird,

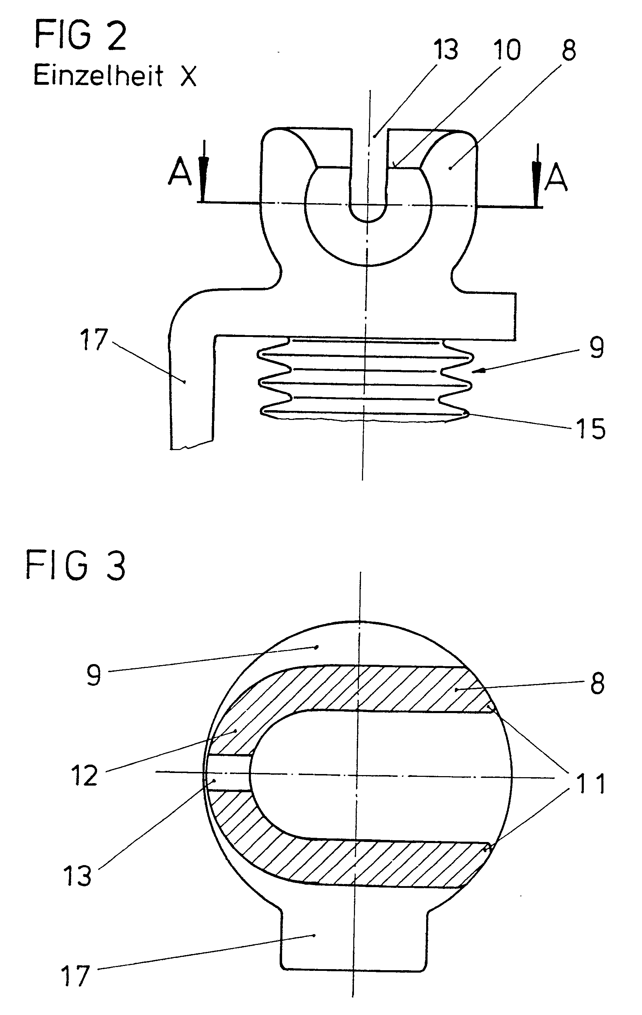

Figur 2 eine Einzelheit bei X ohne den Bolzen und

Figur 3 ein Schnitt nach der Linie A-A (um 90° gedreht).

In der Zeichnung ist der Reflektor (1) in einem von Gehäuse (2) und Lichtscheibe (3) gebildeten Innenraum angeordnet und in diesem um zwei senkrecht zueinander verlaufende Achsen schwenkbar. Die Achsen werden von zwei verstellbaren Schwenkpunkten (nicht dargestellt) und einem ortsfesten Schwenkpunkt (4) gebildet. Das Gehäuse (2) weist auf seiner Rückseite eine Öffnung auf, in welches ein Kunststoffteil (5) mittels eines Drehverschlusses eingesetzt ist. In das Kunststoffteil (5) ist ein Bolzen (6) mit seinem freien Ende klemmend eingesetzt, während der Bolzen an seinem in das Innere des Gehäuses (2) ragenden freien Ende einen Kugelkopf (7) aufweist, welcher in einer Hülse (8) eines starr mit dem Reflektor (1) verbundenen Aufnahmeteils (9) angeordnet ist. Die Längsachse des Bolzens (6) verläuft etwa parallel zur optischen Achse des Scheinwerfers und die Längsachse der Hülse (8) etwa quer zur Längsachse des Bolzens (6). Auf der der Rückseite des Gehäuses (2) zugewandten Seite ist die Hülse (8) in Richtung ihrer Längsausdehnung geschlitzt. Die Breite des Schlitzes (10) ist größer als der Durchmesser des Bolzens (6), damit der Bolzen (6) beim Schwenken des Scheinwerfers nicht an die Ränder des Schlitzes (10) anstoßen kann. Die Längsachse der Hülse (8) verläuft etwa senkrecht zu der horizontal verlaufenden Schwenkachse. Die Hülse (8) ist an einem freien Ende (11) ohne einen verbleibenden Randbereich geöffnet, während das andere freie Ende (12) der Hülse eine schlitzartige Öffnung (13) aufweist, die in den Schlitz (10) in der Mantelfläche der Hülse (8) übergeht. Die schlitzartige Öffnung (13) weist eine kleinere Breite auf als der Schlitz (10) in der Mantelfläche der Hülse (8). Das die Hülse (8) an einem freien Ende tragende Aufnahmeteil (9) ist bolzenförmig ausgeführt und weist in dem Bereich, der in dem Reflektor eingesetzt ist, eine Sackbohrung (14) auf. Das bolzenförmige Aufnahmeteil (9) verjüngt sich zu seinem freien Ende hin konisch und weist an seiner Mantelfläche umlaufende Rippen (15) auf, die sich zu ihrer Stirnfläche hin verjüngen. Das bolzenförmige Aufnahmeteil (9) ist selbstklemmend in eine Vertiefung (16) der Rückseite des Reflektors (1) eingesetzt. Damit das bolzenförmige Aufnahmeteil (9) sicher in der Vertiefung (16) gehalten wird, weist das bolzenförmige Aufnahmeteil in seinem mittleren Bereich eine angeformte federnde Zunge (17) auf, deren Rastnase an ihrem freien Ende in eine Hinterschneidung des Reflektors (2) eingreift (nicht dargestellt). Nach dem Lösen des Drehverschlusses zwischen dem Kunststoffteil (5) und der Öffnung des Gehäuses (2) kann der Kugelkopf (7) aus der Hülse (8) herausgeschwenkt werden. Anschließend kann einfach und schnell von der Scheinwerferrückseite her, d. h. ohne daß der Reflektor aus dem Gehäuse herausgenommen werden muß, das Stellglied einer Leuchtweiteregelungsanlage montiert werden (nicht dargestellt). Hierbei wird zuerst der Kugelkopf des Bolzens des Stellgliedes in die Hülse hereingeschwenkt und danach das Stellglied in die Öffnung des Gehäuses eingeschraubt.

**Ansprüche**

1. Fahrzeugscheinwerfer mit den Merkmalen :
– der in ein Gehäuse (2) eingesetzte Reflektor (1) ist um zwei senkrecht aufeinanderstehende Achsen verstellbar und in zwei verstellbaren Schwenkpunkten und einem dritten Schwenkpunkt (4) gelagert,
– mindestens ein Schwenkpunkt (4) wird von einem Kugelkopf (7) und einem starr mit dem Reflektor (1) verbundenen den Kuglehopt autnehmenden Aufnahmeteil (9) gebildet,
– der Kugelkopf (7) ist an dem freien Ende eines Bolzens (6) angeordnet, dessen Längsachse etwa parallel zur optischen Achse des Scheinwerfers verläuft,
– in die Rückseite des Gehäuses (2) ist eine Öffnung eingebracht, in die der Bolzen (6) eingreift, dadurch gekennzeichnet, daß
– der freie Endabschnitt des Aufnahmeteils (9) als Hülse (8) ausgebildet ist, deren Längsachse senkrecht zur Längsachse des Bolzens (6) steht,
– der Innendurchmesser der Hülse (8), dem Außendurchmesser des Kugelkopfes (7) entspricht,
– die Hülse (8) auf der der Gehäuserückseite zugewandten Seite einen in Richtung ihrer Längsausdehnung verlaufenden Schlitz (10) aufweist, durch den der Bolzen (6) hindurchragt,
– die Hülse (8) zumindest an einem freien Ende ohne verbleibenden Innenrand geöffnet ist.

2. Scheinwerfer nach Anspruch 1, dadurch gekennzeichnet, daß die Längsachse der Hülse (8) senkrecht zu der horizontalen Schwenkachse des Reflektors (1) verläuft.

3. Scheinwerfer nach Anspruch 1 oder 2, dadurch gekennzeichnet, daß die Hülse (8) an ihrem geschlossenen Ende eine schlitzartige Öffnung (13) aufweist, die in Richtung, in der sich der Bolzen (6) erstreckt, geöffnet ist.

4. Scheinwerfer nach einem der Ansprüche 1 bis 3, dadurch gekennzeichnet, daß die Hülse (8) an dem freien Ende eines bolzenförmigen Aufnahmeteils (9) angeordnet ist, dessen Längsachse etwa senkrecht zur Längsachse der Hülse (8) verläuft und das selbstrastend und/oder selbstklemmend in eine Öffnung oder Vertiefung (16) des Reflektors (1) eingesetzt ist.

5. Scheinwerfer nach Anspruch 4, dadurch gekennzeichnet, daß in dem Bereich des bolzenförmigen Aufnahmeteils (9), das in den Reflektor (1) eingesetzt ist, eine Sackbohrung (14) angebracht ist.

6. Scheinwerfer nach Anspruch 4 oder 5, dadurch gekennzeichnet, daß an die Mantelfläche des bolzenförmigen Aufnahmeteils (9) umlaufende Rippen angeformt sind, die an der Innenfläche der Vertiefung (16) oder der Öffnung des Reflektors (1) unter Vorspannung anliegen.

7. Scheinwerfer nach einem der Ansprüche 4 bis 6, dadurch gekennzeichnet, daß die Vertiefung (16) bzw. die Öffnung, in die das bolzenförmige Aufnahmeteil (9) unter Vorspannung eingesetzt ist, sich in Einsetzrichtung des Aufnahmeteils (9) konisch verjüngt.

8. Scheinwerfer nach einem der Ansprüche 1 bis 7, dadurch gekennzeichnet, daß der den Kugelkopf (7) tragende Bolzen (6) mittels eines Drehverschlusses lösbar in dem Gehäuse (2) arretiert ist.

**Claims**

1. Vehicle headlight having the features :
– the reflector (1) inserted in a casing (2) can be adjusted about two axes which are perpendicular to one another and is mounted in two adjustable pivot points and in a third pivot point (4),
– at least one pivot point (4) is formed by a ball bearing (7) and a receptacle part (9) which is connected rigidly to the reflector (1) and receives the ball bearing,
– the ball bearing (7) is arranged at the free end of a bolt (6), the longitudinal axis of which extends approximately in parallel to the optical axis of the headlight,
– in the rear of the casing (2) there is an opening in which the bolt (6) engages, characterised in that
– the free end section of the receptacle part (9) is constructed as a sheath (8), the longitudinal axis of which is perpendicular to the longitudinal axis of the bolt (6),
– the internal diameter of the sheath (8) corresponds to the external diameter of the ball bearing (7),
– the sheath (8) has on the side facing the rear of the casing a slot (10) which extends in the direction of the longitudinal extension of said rear of the casing and through which the bolt (6) projects,
– the sheath (8) is open at least at one free end without a residual inner edge.

2. Headlight according to Claim 1, characterised in that the longitudinal axis of the sheath (8) extends perpendicular to the horizontal pivot axis of the reflector (1).

3. Headlight according to Claim 1 or 2, characterised in that the sheath (8) has at its closed end a slotlike opening (13) which is open in the direction in which the bolt (6) extends.

4. Headlight according to one of Claims 1 to 3, characterised in that the sheath (8) is arranged at the free end of a bolt-shaped receptacle part (9), the longitudinal axis of which extends approximately perpendicular to the longitudinal axis of the sheath (8) and which is inserted in a self-locking and/or self-clamping manner into an opening or depression (16) of the reflector (1).

5. Headlight according to Claim 4, characterised in that there is a blind bore (14) in the region of the bolt-shaped receptacle part (9) which is inserted into the reflector (1).

6. Headlight according to Claim 4 or 5, characterised in that formed onto the outer surface of the bolt-shaped receptacle part (9) there are circumferential ribs which rest against the inner surface of the depression (16) or of the opening of the reflector (1) with pretensioning.

7. Headlight according to one of Claims 4 to 6, characterised in that the depression (16) or the opening into which the bolt-shaped receptacle part (9) is inserted with pretensioning tapers conically in the insertion direction of the receptacle part (9).

8. Headlight according to one of Claims 1 to 7, characterised in that the bolt (6) bearing the ball bearing (7) is releasably arrested in the casing (2) by means of a rotary lock.

**Revendications**

1. Projecteur de véhicule ayant les particularités suivantes :
   - il comprend un réflecteur (1) disposé pivotant autour de deux axes orthogonaux dans un boîtier (2) et attaché en deux points de pivotement réglables et un troisième point de pivotement (4),
   - au moins un point de pivotement (4) est formé par une rotule (7) et une pièce réceptrice (9) reliée rigidement au réflecteur (1) et recevant la rotule,
   - la rotule (7) est disposée à l'extrémité libre d'une tige (6) dont l'axe longitudinal est à peu près parallèle à l'axe optique du projecteur,
   - le côté arrière du boîtier (2) présente une ouverture, dans laquelle pénètre la tige (6), caractérisé en ce que
   - la partie terminale libre de la pièce réceptrice (9) est réalisée comme une douille (8) dont l'axe longitudinal est perpendiculaire à l'axe longitudinal de la tige (6),
   - le diamètre intérieur de la douille (8) correspond au diamètre extérieur de la rotule (7),
   - la douille (8) présente, sur le côté dirigé vers l'arrière du boîtier, une fente (10) s'étendant dans le sens de la longueur de la douille et à travers laquelle passe la tige (6),
   - la douille (8) est ouverte à au moins une extrémité libre, sans qu'il subsiste un rebord intérieur.

2. Projecteur selon la revendication 1, caractérisé en ce que l'axe longitudinal de la douille (8) est perpendiculaire à l'axe de pivotement horizontal du réflecteur (1).

3. Projecteur selon la revendication 1 ou 2, caractérisé en ce que la douille (8) présente, à son extrémité fermée, une ouverture (13) semblable à une fente, qui est ouverte dans la direction suivant laquelle s'étend la tige (6).

4. Protecteur selon une des revendications 1 à 3, caractérisé en ce que la douille (8) est disposée à l'extrémité libre d'une pièce réceptrice (9) en forme de tige, dont l'axe longitudinal est à peu près perpendiculaire à l'axe longitudinal de la douille (8) et qui est fixée avec blocage automatique et/ou à autoserrage dans une ouverture ou une cavité (16) du réflecteur (1).

5. Projecteur selon la revendication 4, caractérisé en ce qu'un trou borgne (14) est formé dans la partie fixée dans le réflecteur (1) de la pièce réceptrice (9) en forme de tige.

6. Projecteur selon la revendication 4 ou 5, caractérisé en ce que la surface latérale de la pièce réceptrice (9) en forme de tige est pourvue de nervures circonférentielles qui s'appliquent avec précontrainte contre la surface interne de la cavité (16) ou de l'ouverture du réflecteur (1).

7. Projecteur selon une des revendications 4 à 6, caractérisé en ce que la cavité (16) ou l'ouverture dans laquelle est fixée avec précontrainte la pièce réceptrice (9) en forme de tige, se rétrécit coniquement dans le sens de l'introduction de la pièce réceptrice (9).

8. Projecteur selon une des revendications 1 à 7, caractérisé en ce que la tige (6) portant la rotule (7) est bloquée de manière détachable dans le boîtier (2) au moyen d'un verrouillage à rotation.

# FIG 1

## FIG 2
### Einzelheit X

## FIG 3